# FASCICULE DE BREVET EUROPEEN

(11) **EP 0 987 995 B1**
(45) Date de publication et mention de la délivrance du brevet: **29.11.2006**
(21) Numéro de dépôt: 99909077.2
(22) Date de dépôt: 23.03.1999
(51) Int. Cl.: A61C 13/00

(54) **ARMATURE EN MATERIAU COMPOSITE POUR UNE PROTHESE DENTAIRE ADJOINTE, ET PROCEDE DE FABRICATION**
GERÜST AUS VERBUNDMATERIAL FÜR EINE ZAHNPROTHESE SOWIE VERFAHREN ZU DESSEN HERSTELLUNG
COMPOSITE MATERIAL ARMATURE FOR COMPLETE DENTURE, AND METHOD FOR MAKING SAME

(30) Priorité: 25.03.1998 FR 9803931
(43) Date de publication de la demande: 29.03.2000
(73) Titulaire: Billet, Gilles, F-38500 Voiron (FR); Clunet-Coste, Bruno, 38500 Tolvon (FR); Collombin, André, 38500 Voiron (FR); Maneuf, Bernard, 38500 Voiron (FR)
(72) Inventeur: Billet, Gilles, F-38500 Voiron (FR); Clunet-Coste, Bruno, 38500 Tolvon (FR); Collombin, André, 38500 Voiron (FR); Maneuf, Bernard, 38500 Voiron (FR)
(74) Mandataire: Hecké, Gérard
(86) Numéro de dépôt international: PCT/FR1999/000677
(87) Numéro de publication internationale: WO 1999/048434

(56) Documents cités:
- WO-A-90/11732
- WO-A-96/25911
- WO-A-98/19621
- US-A- 2 418 833
- US-A- 5 676 546

## Description

### Domaine technique de l'invention

L'invention est relative à une armature pour prothèse dentaire adjointe réalisée en un matériau composite à renfort de fibres stratifié, préimprégnées d'une résine à l'état d'avant polymérisation.

### Etat de la technique

Les armatures connues comportent généralement des plaques métalliques obtenues par des procédés de coulées longues et onéreuses. La présence d'une telle plaque métallique rigide à l'intérieur de la bouche est à la fois inesthétique et inconfortable.

On a déjà proposé de remplacer les plaques métalliques de prothèses dentaires adjointes par des plaques en résine acrylique plus légères, dans lesquelles sont enrobées des fibres de renforcement (document US-A-4894012). L'incorporation d'un réseau ou d'un faisceau de fibres n'est cependant pas suffisant pour obtenir une résistance mécanique significative des plaques en résine acrylique. Les fibres constituent un simple filet interne permettant aux pièces fracturées de ne pas se détacher complètement après la fracture de la plaque en bouche.

Le document US-A-5 676 546 divulgue une armature pour prothèse dentaire adjointe selon le préambule de la revendication 1.

### Objet de l'invention

Un premier objet de l'invention consiste à réaliser une armature pour prothèse dentaire adjointe selon la revendication 1, particulièrement légère en poids, et ayant une résistance mécanique élevée.

Un deuxième objet de l'invention vise également à proposer un procédé de fabrication d'une armature de prothèse dentaire adjointe selon les revendications 8 or 9 particulièrement simple et rapide à mettre en oeuvre.

L'armature selon l'invention est composée :
- d'une pièce de base comprenant une couche de tissu maillé dudit matériau composite, laquelle est agencée selon une coque de support en forme de voûte,
- d'une pièce intermédiaire s'étendant le long du sommet de la pièce de base pour constituer une poutre ayant une bonne résistance à l'écrasement, et délimitant le profil de l'armature,
- et d'une pièce de surface formant une chape recouvrant totalement la pièce de base et la pièce intermédiaire, le matériau de la chape étant constitué par un stratifié ayant une matrice organique de même nature que celle de la pièce de base, l'ensemble des trois pièces formant après mise en forme et polymérisation un profilé auto-portant ayant une bonne résistance à la fracture.

Selon un mode de réalisation préférentiel, la pièce intermédiaire est formée par un faisceau de fibres longues et continues s'étendant le long du profil de la poutre, et logées dans une gaine servant d'étui. La gaine est constituée par un tissage de fibres, lesquelles peuvent être de même nature que les fibres du matériau des deux autres pièces de base et de surface.

Selon une caractéristique de l'invention, la pièce intermédiaire est équipée d'un dispositif de mise en forme destiné à entourer et serrer la gaine et le faisceau de fibres pour définir une section transversale prédéterminée.

Selon une autre caractéristique de l'invention, la base de la gaine présente une forme conjuguée à celle du sommet de la pièce de base, et est dotée d'une rigidité mécanique supérieure à celle du reste de tissage des fibres de ladite gaine.

Un premier procédé de fabrication de l'armature selon l'invention est caractérisé par les étapes suivantes :
- on place dans une première étape la pièce de base sur un modèle de laboratoire, ladite pièce comprenant un stratifié à tissu préimprégné de résine à renfort de fibres et particules,
- on forme sous pression isostatique la pièce de base par compression suite au plaçage dudit stratifié sur le modèle de laboratoire,
- on polymérise la résine de la pièce de base formée pour obtenir une coque de support en forme de voûte,
- on applique dans une deuxième étape la pièce intermédiaire sur le sommet de la voûte de la pièce de base,
- et dans une troisième étape, on recouvre ladite pièce intermédiaire par la pièce de surface mise en forme sous pression isostatique pour constituer ladite chape après polymérisation.

Un deuxième mode de fabrication est caractérisée en ce que :
- on applique d'abord la pièce intermédiaire le long de la crête d'un modèle de laboratoire sans écraser les fibres de la gaine,
- on opère une prépolymérisation de la pièce intermédiaire pour déterminer le profil de l'armature,
- on enlève la pièce intermédiaire, et on place la pièce de base sur le modèle sans formage préalable et sans polymérisation,
- on replace la pièce intermédiaire prépolymérisée sur la pièce de base, et on la recouvre avec la pièce de surface,
- l'ensemble est ensuite mis en forme sous pression isostatique, suivi de la phase de polymérisation complète de l'armature.

Selon une autre caractéristique du procédé, on incorpore dans le profilé autoportant avant la phase de formage et de polymérisation, des éléments de réservation traversant verticalement la pièce de base, la pièce intermédiaire, et la pièce de surface, chaque élément de réservation étant réalisé en un matériau incompatible avec le composite du profilé pour favoriser son extraction après formage. On introduit des éléments de rétention dans les cavités confinées après extraction des éléments de réservation, chaque élément de rétention étant constitué par un tenon ayant une partie saillante pour la réception d'une dent artificielle.

Une telle armature pour prothèse dentaire adjointe peut être solidarisée à un attachement d'une racine. L'attachement comporte à cet effet :
- un élément mâle formé par une cupule remplie d'une résine composite photopolymérisable, et fixée sur l'extrémité d'un tenon d'une racine ou d'une reconstitution coronaire, ladite cupule étant réalisée en un matériau transparent aux rayons électromagnétiques, et incompatible avec la résine des pièces constitutives du profilé,
- un élément femelle composée d'une enveloppe en matériau élastique coopérant à emboîtement avec la face externe de la cupule, et solidarisé au profilé auto-portant de l'armature lors de l'opération de formage.

### Description sommaire des dessins

D'autres avantages et caractéristiques ressortiront plus clairement de la description qui va suivre d'un mode de réalisation de l'invention, donné à titre d'exemple non limitatif et représenté aux dessins annexés dans lesquels :
- la figure 1 est une vue en perspective d'une armature pour une prothèse dentaire adjointe selon l'invention ;
- la figure 2 représente une vue en coupe verticale du profilé auto-portant de l'armature posée sur un modèle de laboratoire ;
- la figure 3 est une vue partielle de la pièce intermédiaire de l'armature ;
- la figure 4 est une vue à échelle réduite du profilé de la figure 2, après enlèvement du modèle de laboratoire ;
- la figure 5 montre une vue en coupe d'une variante de réalisation du profilé auto-portant de l'armature ;
- les figures 6 et 7 représentent le profilé complexe de la figure 5, respectivement après mise en place d'éléments de réservation, et d'organes de rétention.
- la figure 8 montre un attachement d'une armature selon l'invention à une racine résiduelle d'une dent.

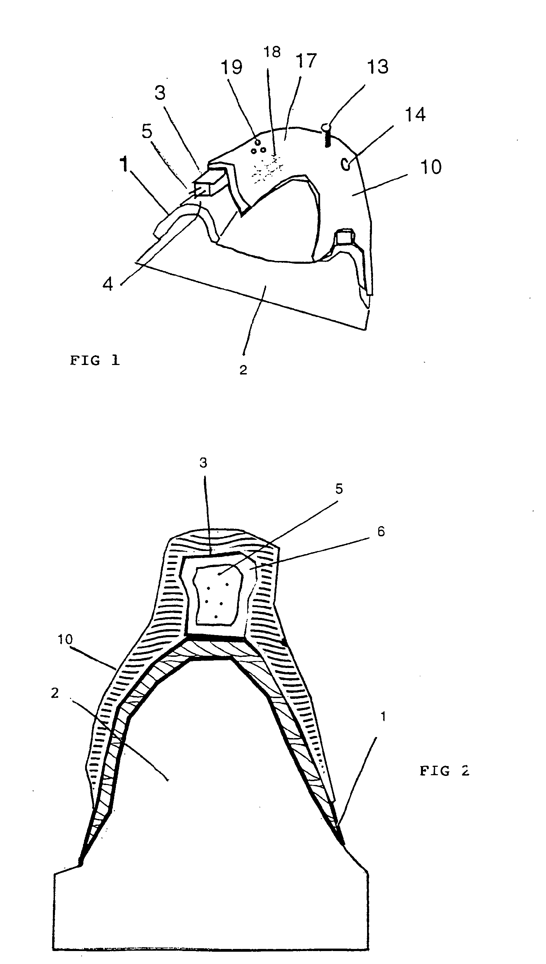

En référence aux figures 1 à 4, une armature 12 pour une prothèse dentaire adjointe ou mobile est réalisée au moyen d'un matériau en composite de résine 17 à fibres 18 et particules 19 de renforcement constituant après formage un profilé 12 auto-portant rigide et résistant à la fracture. Les fibres 18 et particules 19 de renforcement sont agencées selon un stratifié composé d'une ou de plusieurs couches de tissu maillé. Les fibres peuvent être des fibres de verre, de céramique, d'aramide ou de silice, préimprégnées d'une résine à l'état d'avant polymérisation.

Un premier procédé de fabrication d'un profilé 12 auto-portant selon l'invention s'effectue en trois étapes principales :
- au cours d'une première étape, une pièce de base 1 constituée par un stratifié à tissu préimprégné est formée sous pression isostatique sur un modèle de laboratoire 2 représentatif des tissus mous. L'opération de formage stratifié intervient par compression suite au plaçage de la pièce de base 1 sur le modèle de laboratoire 2 selon le procédé et la machine décrits dans le document WO95/08300. La résine 17 de la pièce de base 1 est à titre d'exemple une résine méthacrylate ou diméthacrylate, mais tout autre type de résine organique approprié à un usage dentaire peut être utilisé, tel que mentionné dans le document précité. La résine 17 à renforts de fibres 18 et particules 19, renferme d'autre part des agents photo-amorceurs et des agents accélérateurs permettant une réticulation par éclairage au moyen d'une lampe en lumière visible. Après les opérations de formage et de photopolymérisation, la pièce de base 1 est agencée selon une coque de support en forme de voûte épousant le profilé du modèle de laboratoire 2.

Dans une deuxième étape, une pièce intermédiaire 3 est appliquée sur le sommet 4 pour constituer une poutre présentant une résistance à l'écrasement élevée. La pièce intermédiaire 3 est formée par un faisceau de fibres 5 longues et continues, lesquelles sont logées dans une gaine 6 constituée d'un tissage de fibres 8. La gaine 6 sert d'étui pour le logement des fibres 5 préimprégnées, et comporte une base 7 de forme conjuguée à celle du sommet 4 de la pièce de base 1.

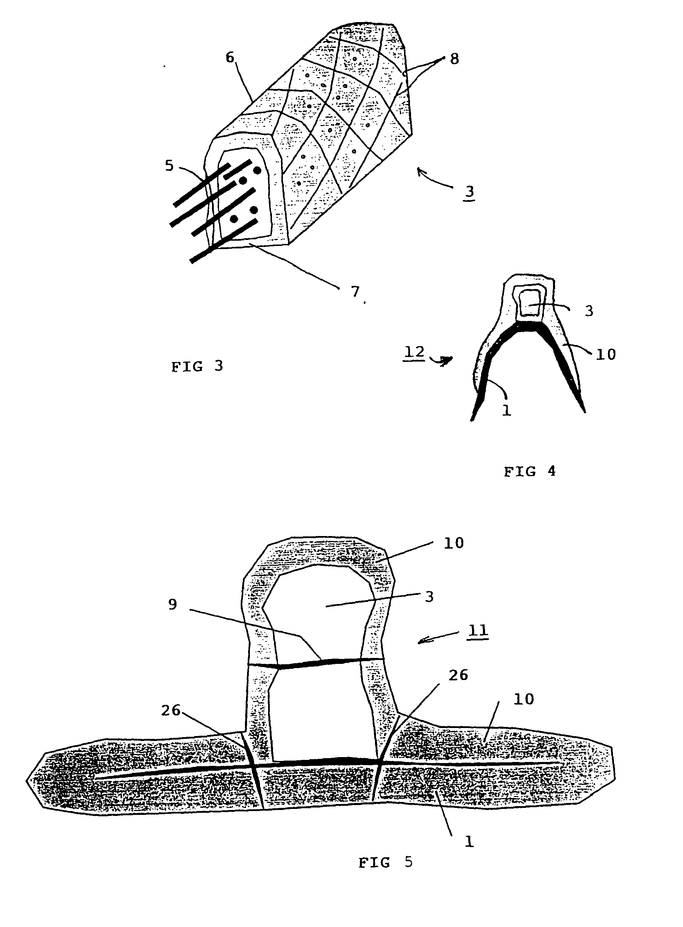

Sur la figure 3, la base 7 de la gaine 6 est plane pour obtenir une bonne surface d'adhérence avec le sommet 4 de la pièce de base 1. La rigidité de la base 7 est de préférence supérieure à celle du reste du tissage de fibres 8 de la gaine 6.

La base 7 de la gaine 6 peut être constituée avantageusement par une partie de la pièce de base 1.

Dans une troisième étape, une pièce de surface 10 constituée par un stratifié à tissu de fibres 18 et particules 19 préimprégnées, de même nature que celui de la pièce de base 1, est posée sur la pièce intermédiaire 3, puis est mis en forme sous pression isostatique et photo-polymérisée dans la machine de formage utilisée précédemment. La pièce de surface 10 constitue une chape recouvrant totalement la pièce de base 1, et la pièce intermédiaire 3 de manière à obtenir un profilé auto-portant 12 rigide assurant une résistance élevée à la fracture.

La poutre constitutive de la pièce intermédiaire 3 est prise en sandwich entre les deux pièces 1 et 10 pour déterminer le profil de la structure, ainsi que la résistance à l'écrasement. Les pièces de la base 1 et de la surface 10 assurent après polymérisation la rigidité mécanique de la structure.

Un deuxième mode de fabrication du profilé 12 auto-portant peut être mis en oeuvre de la manière suivante :

On applique d'abord la pièce intermédiaire 3 sur la crête de modèle de laboratoire 2, sans écraser les fibres 5 de la pièce 3 en l'exposant un court instant à la lumière, de manière à déterminer le profil de l'armature 12. Après enlèvement de la pièce intermédiaire 3, la pièce de base 1 est placée sur le modèle de laboratoire 2 sans formage préalable et sans polymérisation. On replace la pièce intermédiaire 3 prépolymérisée sur la pièce de base 1, et on la recouvre avec la pièce de surface 10. L'ensemble de la structure est ensuite mis en forme sous pression isostatique dans la machine de formage, suivi de la photo-polymérisation.

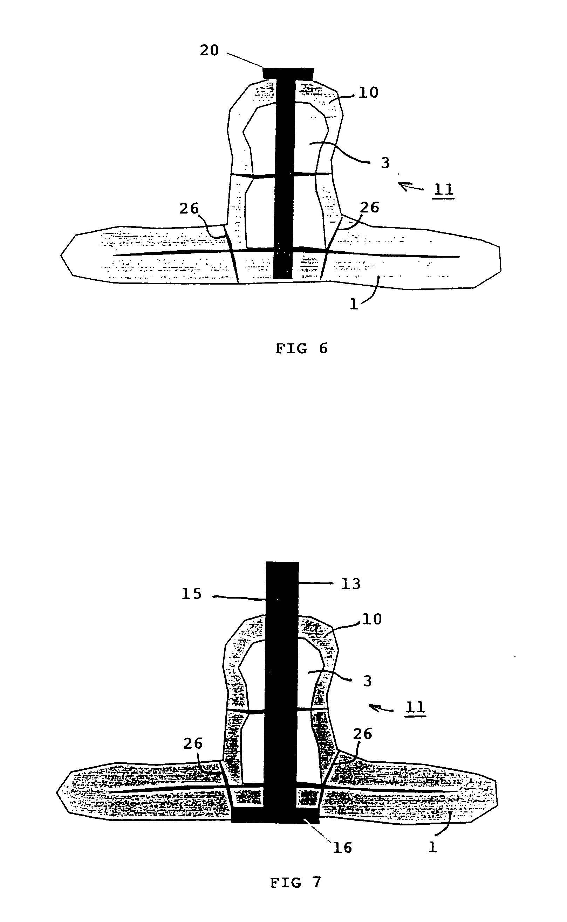

Selon la figure 5, il est possible de faire usage d'un profilé complexe 11, dans lequel la pièce intermédiaire 3 n'est pas polymérisée, et est équipée d'un dispositif de mise en forme 9 destiné à étrangler transversalement le faisceau de fibres 5 pour définir une section transversale prédéterminée, par exemple en Oméga. La pièce intermédiaire 3 est cousue ou soudée aux interfaces 26 entre la pièce de base 1 et la pièce de surface 10. Les bords de liaison 12 de la pièce de la base 1 et de la pièce de surface 10 peuvent également être cousus ou soudés. Un tel profilé 11 auto-portant peut être formé en une seule étape de fabrication.

En référence aux figures 6 et 7, on incorpore dans le profilé complexe 11 avant la phase de formage et de polymérisation, des éléments de réservation 20 traversant la pièce de base 1, la pièce intermédiaire 3, et la pièce de surface 10 selon une direction verticale. Les éléments de réservation 20 sont réalisés en un matériau incompatible avec la résine utilisée pour le profilé 11, de manière à éviter toute adhérence lors du formage. L'extraction ultérieure des éléments de réservation 20 délimite ensuite des cavités 14 pour l'insertion d'organes de rétention 13 (figure 7). Les organes de rétention 13 sont agencés selon des tenons 15 munis chacun d'une partie saillante pour la réception d'une dent artificielle, et une embase 16 en forme de disque annulaire à l'extrémité opposée. Chaque organe de rétention 13 est réalisé en un matériau composite à base de résine 17 et à renfort de fibres 18 et particules 19 du même type que le profilé auto-portant 12.

Dans une étape finale de fabrication, les profilés 11, 12 auto-portants sont revêtus par un revêtement externe de finition à base de résine organique.

L'intérêt de ces structures auto-portantes pour la fabrication de dentiers réside dans leur légèreté, et dans leur grande flexibilité conjointement avec une grande résistance mécanique procurant un meilleur confort dans la bouche du patient. L'absence de tout matériau métallique permet de les associer par des attachements appropriés non métalliques aux racines éventuelles.

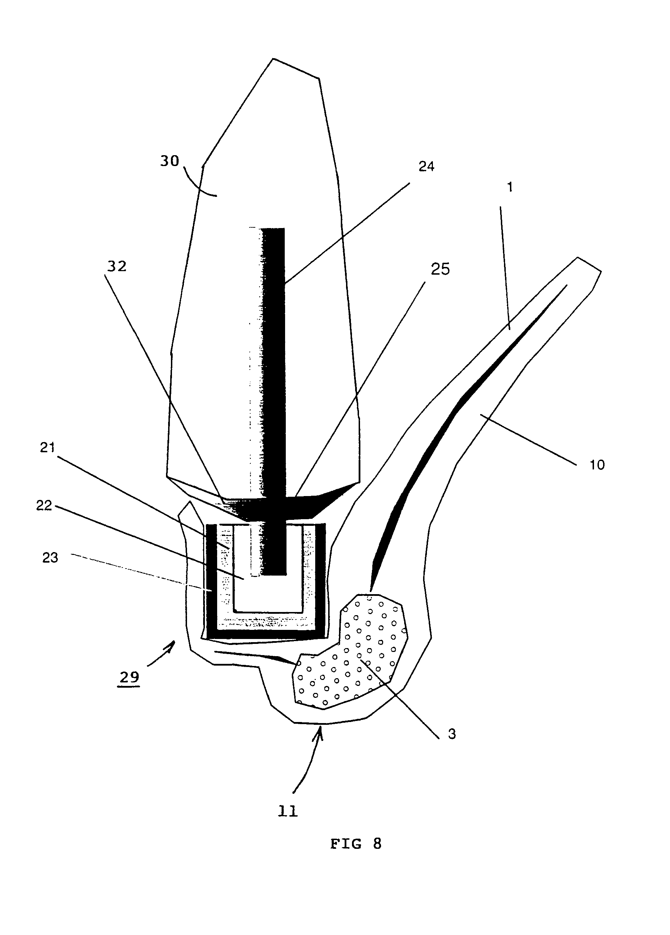

Sur l'attachement 29 de la figure 8, la racine 30 d'une dent est coiffée d'un plateau 32 monté sur un tenon 24 ayant une extrémité 25 saillante. Une telle reconstitution coronaire est décrite en détail dans les documents W0 95/08300 et WO 96/15731. Une cupule 21 en matériau céramique ou en verre, est remplie d'une résine composite 22 photo-polymérisable, et est fixée sur l'extrémité 25 du tenon 24. La cupule 21 constitue l'élément mâle de l'attachement 29, et peut être réalisée en tout autre matériau transparent aux rayons électromagnétiques et incomptatible avec la résine des pièces constitutives du profilé 11, 12. La cupule 21 cylindrique est revêtue d'une enveloppe 23 en matériau élastique, susceptible de glisser sur la face d'appui de la cupule 21 avec un effet rétentif. L'enveloppe 23 constitue l'élément femelle de l'attachement 29. L'état de surface de l'enveloppe 23 permet sa solidarisation avec le profilé 11 auto-portant lors de l'opération de formage de ce dernier, en particulier lorsque la pièce de base 1 est appliquée sur le modèle dans le deuxième procédé de fabrication décrit précédemment, avant formage et durcissement.

## Revendications

1. Armature pour prothèse dentaire adjointe réalisée en un matériau composite à renfort de fibres (18) stratifié, préimprégnées d'une résine (17) à l'état d'avant polymérisation,
**caractérisée en ce que** l'armature (12) est composée :
- d'une pièce de base (1) comprenant une couche de tissu maillé dudit matériau composite, laquelle est agencée selon une coque de support en forme de voûte,
- d'une pièce intermédiaire (3) s'étendant le long du sommet (4) de la pièce de base (1) pour constituer une poutre ayant une bonne résistance à l'écrasement, et délimitant le profil de l'armature (12),
- et d'une pièce de surface (10) formant une chape recouvrant totalement la pièce de base (1) et la pièce intermédiaire (3), le matériau de la chape étant constitué par un stratifié ayant une matrice organique de même nature que celle de la pièce de base (1), l'ensemble des trois pièces (1, 3, 10) formant après mise en forme et polymérisation un profilé auto-portant ayant une bonne résistance à la fracture.

2. Armature pour prothèse dentaire adjointe selon la revendication 1, **caractérisée en ce que** la pièce intermédiaire (3) est formée par un faisceau de fibres (5) longues et continues s'étendant le long du profil de la poutre, et logées dans une gaine (6) servant d'étui.

3. Armature pour prothèse dentaire adjointe selon la revendication 2, **caractérisée en ce que** la gaine (6) est constituée par un tissage de fibres (8), lesquelles sont de même nature que les fibres (18) du matériau des deux autres pièces de base (1) et de surface (10).

4. Armature pour prothèse dentaire adjointe selon la revendication 2 ou 3, **caractérisée en ce que** la pièce intermédiaire (3) est équipée d'un dispositif de mise en forme (9) destiné à entourer et serrer la gaine (6) et le faisceau de fibres (5) pour définir une section transversale prédéterminée.

5. Armature pour prothèse dentaire adjointe selon la revendication 4, **caractérisée en ce que** la section transversale de la pièce intermédiaire (3) est conformée en Oméga.

6. Armature pour prothèse dentaire adjointe selon la revendication 2 ou 3, **caractérisée en ce que** la base (7) de la gaine (6) présente une forme conjuguée à celle du sommet (4) de la pièce de base (1), et est dotée d'une rigidité mécanique supérieure à celle du reste de tissage des fibres (8) de ladite gaine (6).

7. Armature pour prothèse dentaire adjointe selon la revendication 2 ou 3, **caractérisée en ce que** la base (7) de la gaine (6) est constituée par une partie de la pièce de base (1).

8. Procédé de fabrication d'une armature pour prothèse dentaire adjointe selon l'une des revendications 1 à 7, **caractérisée en ce que** :
- on place dans une première étape la pièce de base (1) sur un modèle de laboratoire (2), ladite pièce comprenant un stratifié à tissu préimprégné de résine (17) à renfort de fibres (18) et particules (19),
- on forme sous pression isostatique la pièce de base (1) par compression suite au plaçage dudit stratifié sur le modèle de laboratoire (2),
- on polymérise la résine (17) de la pièce de base (1) formée pour obtenir une coupe de support en forme de voûte,
- on applique dans une deuxième étape la pièce intermédiaire (3) sur le sommet de la voûte de la pièce de base (1),
- et dans une troisième étape, on recouvre la pièce intermédiaire (3) par la pièce de surface (10) mise en forme sous pression isostatique pour constituer après polymérisation ladite chape.

9. Procédé de fabrication d'une armature pour prothèse dentaire adjointe selon l'une des revendications 1 à 7, **caractérisée en ce que** :
- on applique d'abord la pièce intermédiaire (3) le long de la crête d'un modèle de laboratoire (2) sans écraser les fibres (5) de la gaine (6),
- on opère une prépolymérisation de la pièce intermédiaire (3) pour déterminer le profil de l'armature,
- on enlève la pièce intermédiaire (3), et on place la pièce de base (1) sur le modèle (2) sans formage préalable et sans polymérisation,
- on replace la pièce intermédiaire (3) prépolymérisée sur la pièce de base (1), et on la recouvre avec la pièce de surface (10),
- l'ensemble est ensuite mis en forme sous pression isostatique, suivi de la phase de polymérisation complète de l'armature.

10. Procédé de fabrication d'une armature de prothèse dentaire selon la revendication 8 ou 9, **caractérisé en ce que** on incorpore dans le profilé autoportant (11) avant la phase de formage et de polymérisation, des éléments de réservation (20) traversant verticalement la pièce de base (1), la pièce intermédiaire (3), et la pièce de surface (10), chaque élément de réservation (20) étant réalisé en un matériau incompatible avec le composite du profilé (11) pour favoriser son extraction après formage.

11. Procédé de fabrication d'une armature de prothèse dentaire selon la revendication 10, **caractérisé en ce que** on introduit des éléments de rétention (13) dans les cavités (14) confinées après extraction des éléments de réservation (20), chaque élément de rétention (13) étant constitué par un tenon (15) ayant une partie saillante pour la réception d'une dent artificielle.

12. Armature pour prothèse dentaire adjointe selon la revendication 1, **caractérisée en ce que** l'armature est adjointe à un attachement (29), lequel comporte :
- un élément mâle formé par une cupule (21) remplie d'une résine composite (22) photopolymérisable, et fixée sur l'extrémité (25) d'un tenon (24) d'une racine (30) ou d'une reconstitution coronaire, ladite cupule étant réalisée en un matériau transparent aux rayons électromagnétiques, et incompatible avec la résine des pièces constitutives du profilé (11),
- un élément femelle composée d'une enveloppe (23) en matériau élastique coopérant à emboîtement avec la face externe de la cupule (21), et solidarisé au profilé (11) auto-portant de l'armature lors de l'opération de formage.

## Claims

1. An reinforcing frame for removable dental prosthesis made of a composite material with laminated fiber reinforcement of fibres (18), pre-impregnated with a resin (17) in the state prior to polymerization,
**characterized in that** the frame (12) is composed:
- of a base part (1) comprising a layer of woven fabric of said composite material, which is arranged as a support shell in the form of an arch,
- of an intermediate part (3) extending along the top (4) of the base part (1) to form a beam having a good crushing strength, and forming the limits of the section of the frame (12),
- and of a surface part (10) forming a cap totally covering the base part (1) and intermediate part (3), the material of the cap being formed by a laminated fiber reinforcement material having an organic matrix of the same nature as that of the base part (1), the assembly made up of the three parts (1, 3, 10) forming after shaping and polymerization a self-supporting profiled exhibiting a good resistance to fracture.

2. The frame for a removable dental prosthesis according to claim 1, **characterized in that** the intermediate part (3) is formed by a bundle of long and continuous fibres (5) extending along the profile of the beam and housed in a sheath (6) acting as a cover.

3. The frame for a removable dental prosthesis according to claim 2, **characterized in that** the sheath (6) is formed by a woven assembly of fibres (8), which are of the same nature as the fibres (18) of the material of the other two base (1) and surface (10) parts.

4. The frame for a removable dental prosthesis according to claim 2 or 3, **characterized in that** the intermediate part (3) is equipped with a shaping device (9) designed to surround and clamp the sheath (6) and bundle of fibres (5) to define a predetermined transverse cross section.

5. The frame for a removable dental prosthesis according to claim 4, **characterized in that** the transverse cross section of the intermediate part (3) is Omega-shaped.

6. The frame for a removable dental prosthesis according to any claim 2 or 3, **characterized in that** the base (7) of the sheath (6) presents a conjugate shape to that of the top (4) of the base part (1), and has a higher mechanical strength than that of the rest of the woven assembly of fibres (8) of said sheath (6).

7. The frame for a removable dental prosthesis according to claim 2 or 3, **characterized in that** the base (7) of the sheath (6) is formed by a part of the base part (1).

8. A manufacturing process of an frame for a removable dental prosthesis according to one of the claims 1 to 7, **characterized in that** :
- in a first stage the base part (1) is placed on a laboratory model (2), said part comprising a laminated fiber reinforcement material pre-impregnated with resin (17) reinforced with fibres (18) and particles (19),
- the base part (1) is shaped under isostatic pressure by compression following placing of said laminated fiber reinforcement material on the laboratory model (2),
- the resin (17) of the shaped base part (1) is polymerized to obtain a support shell in the form of an arch,
- in a second stage the intermediate part (3) is placed on the top of the arch of the base part (1),
- and in a third stage the intermediate part (3) is covered by the surface part (10) shaped under isostatic pressure to form said cap after polymerization.

9. A manufacturing process of an frame for a removable dental prosthesis according to one of the claims 1 to 7, **characterized in that** :
- the intermediate part (3) is first applied along the top edge of a laboratory model (2) without crushing the fibres (5) of the sheath (6),
- pre-poiymerization of the intermediate part (3) is performed to determine the section of the frame,
- the intermediate part (3) is removed and the base part (1) is placed on the model (2) without prior shaping and without polymerization,
- the pre-polymerized intermediate part (3) is placed on the base part (1) again, and is covered with the surface part (10),
- the assembly is then shaped under isostatic pressure, followed by the complete polymerization stage of the frame.

10. The manufacturing process of an frame for a removable dental prosthesis according to claim 8 or 9, **characterized in that** reservation elements (20) passing transversely through the base part (1), the intermediate part (3), and the surface part (10) are incorporated in the self-supporting profiled part (11) before the shaping and polymerization phase, each reservation element (20) being made of a material incompatible with the composite material of the profiled part (11) insuring easy extraction thereof after shaping.

11. The manufacturing process of an frame for a removable dental prosthesis according to claim 10, **characterized in that** retaining parts (13) are inserted in the confined cavities (14) after the reservation elements (20) have been extracted, each retaining part (13) being formed by a tab (15) having a protruding part for receipt of an artificial tooth.

12. An frame for a removable dental prosthesis according to claim 1, **characterized in that** the frame is removable to an attachment (29), which comprises :
- a male element formed by a cup (21) filled with a photo curable composite resin (22) and fixed onto the end (25) of a tab (24) of a root (30) or of a coronary reconstitution, said cup being made of a material transparent to electromagnetic rays and incompatible with the resin of the parts constituting the profiled part (11),
- a female part composed of an envelope (23) made of flexible material cooperating by engagement with the external face of the cup (21) and secured to the self-supporting profiled part (11) of the frame when the shaping operation is performed.

## Patentansprüche

1. Aufbau für eine zugehörige Zahnprothese, der aus einem Verbundmaterial mit einer lagenweise angeordneten Verstärkung (18) besteht, die im Vor-Polymerisationszustand mit einem Harz (17) vorimprägniert werden,
**dadurch gekennzeichnet, dass** der Aufbau (12) besteht aus:
- einem Basisteil (1), das eine Schicht aus gewirktem Gewebe des genannten Verbundmaterials umfasst, die wie eine bogenförmige Stützschale angeordnet ist,
- einem Zwischenteil (3), das sich entlang dem oberen Bereich (4) des Basisteils (1) erstreckt, um eine Stütze mit guter Stauchfestigkeit zu bilden, die das Profil des Aufbaus (12) begrenzt,
- sowie einem Oberflächenteil (10), das eine Abdeckung bildet, die das Basisteil (1) und das Zwischenteil (3) vollkommen bedeckt, wobei das Material der Abdeckung aus einem geschichteten Material mit einer organischen Matrix gleicher Art wie der des Basisteils (1) besteht, wobei die drei Teile (1, 3, 10) nach Formgebung und Polymerisation ein selbsttragendes Profil mit guter Bruchsicherheit bilden.

2. Aufbau für eine zugehörige Zahnprothese nach Anspruch 1, **dadurch gekennzeichnet, dass** das Zwischenteil (3) von einem Bündel langer, kontiniuerlicher Fasern (5) gebildet wird, die sich entlang dem Profil der Stütze erstrecken, und in einer Hülse (6) angeordnet sind, die als Aufnahme dient.

3. Aufbau für eine zugehörige Zahnprothese nach Anspruch 2, **dadurch gekennzeichnet, dass** die Hülse (6) aus einem Fasergewebe (8) besteht, welche Fasern gleicher Art sind wie die Fasern (18) des Materials der beiden anderen Teile, nämlich des Basisteils (1) und des Oberflächenteils (10).

4. Aufbau für eine zugehörige Zahnprothese nach Anspruch 2 oder 3, **dadurch gekennzeichnet, dass** das Zwischenteil (3) mit einer Formgebungseinrichtung (9) versehen ist, die dazu bestimmt ist, die Hülse (6) und die Hülse und die Fasern (5) zu umspannen, um einen vorbestimmten Querschnitt zu bilden.

5. Aufbau für eine zugehörige Zahnprothese nach Anspruch 4, **dadurch gekennzeichnet, dass** der Querschnitt des Zwischenteils (3) omegaförmig ist.

6. Aufbau für eine zugehörige Zahnprothese nach Anspruch 2 oder 3, **dadurch gekennzeichnet, dass** der untere Teil (7) der Hülse (6) eine an den oberen Teil (4) des Basisteils (1) angepasste Form und eine mechanische Starrheit hat, die größer ist als die des übrigen Gewebes der Fasern (8) der Hülse (6).

7. Aufbau für eine zugehörige Zahnprothese nach Anspruch 2 oder 3, **dadurch gekennzeichnet, dass** der untere Teil (7) der Hülse (6) von einem Teilstück des Basisteils (1) gebildet wird.

8. Verfahren zur Herstellung eines Aufbaus für eine Zahnprothese nach einem der Ansprüche 1 bis 7, **dadurch gekennzeichnet, dass**
- man in einem ersten Schritt das Basisteil (1) auf einem Labormodell (2) anordnet, wobei das Teil einen Schichtstoff aus vorab mit Harz (17) getränktem Stoff mit Faserverstärkung (18) und Partikeln (19) umfasst,
- man unter isostatischem Druck das Basisteil (1) durch Kompression nach dem Pressen des Schichtstoffs auf das Labormodell (2) herstellt,
- man den Harz (17) des geformten Basisteils (1) polymerisiert, um eine bogenförmige Stützschale zu erhalten,
- man in einem zweiten Schritt das Zwischenteil (3) auf den oberen Teil des Bogens des Basisteils (1) drückt,
- und man in einem dritten Schritt das Zwischenteil (3) mit dem unter isostatischem Druck geformten Oberflächenteil (10) bedeckt, um nach der Polymerisation die besagte Abdeckung zu bilden.

9. Verfahren zur Herstellung eines Aufbaus für eine Zahnprothese nach einem der Ansprüche 1 bis 7, **dadurch gekennzeichnet, dass**
- man zunächst das Zwischenteil (3) entlang der Spitze eines Labormodells (2) aufdrückt, ohne die Fasern (5) der Hülse (6) zu quetschen,
- man eine Vorpolymerisation des Zwischenteils (3) vornimmt, um das Profil des Aufbaus zu bestimmen,
- man das Zwischenteil (3) abnimmt und das Basisteil (1) ohne vorheriges Formen und ohne Polymerisation auf dem Modell (2) anordnet,
- man das vorpolymerisierte Zwischenteil (3) wieder auf das Basisteil (1) aufsetzt und mit dem Oberflächenteil (10) bedeckt,
- die Einheit wird anschließend unter isostatischem Druck geformt, woraufhin der gesamte Aufbau polymerisiert wird.

10. Herstellungsverfahren für einen Aufbau einer Zahnprothese nach Anspruch 8 oder 9, **dadurch gekennzeichnet, dass** man in das selbsttragende Profil (11) vor der Formungs- und Polymerisationsphase Platzhalterelemente (20) einbringt, die vertikal durch das Basisteil (1), das Zwischenteil (3) und das Oberflächenteil (10) geführt sind, wobei jedes Platzhalterelement (20) aus einem Material gefertigt ist, das inkompatibel mit dem Verbundwerkstoff des Profils (11) ist, um sein Entfernen nach dem Formen zu erleichtern.

11. Herstellungsverfahren für einen Aufbau einer Zahnprothese nach Anspruch 10, **dadurch gekennzeichnet, dass** man Rückhalteelemente (13) in die Hohlräume (14) einführt, die sich nach dem Herausziehen des Platzhalterelements (20) bilden, wobei jedes Rückhalteelement (13) von einem Stift (15) gebildet wird, der einen herausspringenden Teil für die Aufnahme eines künstlichen Zahns hat.

12. Aufbau für eine zugehörige Zahnprothese nach Anspruch 1, **dadurch gekennzeichnet, dass**
- der Aufbau mit einer Befestigung (29) zusammenhängt, die umfasst:
- ein Einsteckelement, das von einer Art Becher (21) gebildet wird, der mit einem fotopolymerisierbaren Verbundharz (22) gefüllt und am Ende (25) eines Stifts (24) einer Wurzel (30) oder eines Wurzelaufbaus befestigt ist, welcher Becher aus einem für elektromagnetische Strahlung durchlässigen und mit dem Harz der Bestandteile des Profils (11) nicht verträglichen Material besteht,
- ein Aufnahmeelement, das aus einer Hülle (23) aus elastischem Material besteht, das durch Ineinanderfügen mit der Außenseite des Bechers (21) zusammenwirkt und während der Formungsphase fest mit dem selbsttragenden Profil (11) des Aufbaus verbunden ist.
